# EUROPEAN PATENT SPECIFICATION

(11) **EP 0 809 588 B1**
(45) Date of publication and mention of the grant of the patent: **12.05.1999**
(21) Application number: 96904010.4
(22) Date of filing: 07.02.1996
(51) Int. Cl.: B62M 7/12, B62M 23/02, B60L 11/18

(54) **POWERPLANT FOR WHEELED VEHICLES**
ANTRIEBSEINRICHTUNG FÜR FAHRZEUGE
GROUPE MOTEUR POUR VEHICULES A ROUES

(30) Priority: 15.02.1995 IT PD950038
(43) Date of publication of application: 03.12.1997
(73) Proprietor: Zotti, Ezio, 35037 Treponti di Teolo (IT)
(72) Inventor: Zotti, Ezio, 35037 Treponti di Teolo (IT)
(74) Representative: Modiano, Guido, Dr.-Ing.
(86) International application number: EP9600510
(87) International publication number: WO9625320

(56) References cited:
- EP-A- 0 587 120
- AU-A- 6 862 181
- US-A- 3 884 317
- US-A- 4 095 663

## Description

### Field of the Invention

The present invention relates to a powerplant for wheeled vehicles.

### Background Art

Currently there is a wide variety of models of motorized cycles, ranging from bicycles with an auxiliary propulsion device to the actual motorcycles, in which the powerplant is primary and permanent.

Whether auxiliary or primary, motorization is provided by means of internal-combustion engines which have long been known and tested.

Although these engines achieve their tasks, they are, even for small displacements, rather heavy and bulky, including the fuel tank, which is a severe drawback especially in light cycles such as for example motorized bicycles.

In particular in the case of motorized bicycles, models have been marketed in which the internal-combustion engine has been replaced with an electric motor, but in both cases the devices for transmission to the wheel absorb a very large amount of power, which often heavily affects the overall power delivered by the powerplant (whether an internal-combustion engine or an electric motor), which cannot be large due to the above mentioned reasons of bulk. From US-A-3 884 317 it is known a powerplant for wheeled vehicles as defined in the preamble of claim 1. From US-A-4 095 663 it is known an electric generator with a stator and magnets.

### Disclosure of the Invention

A principal aim of the present invention is to provide a powerplant for wheeled vehicles, particularly bicycles, in which power is transmitted to the bicycle wheel without requiring transmission devices and without having any electrical connections between the power source and the wheel.

An object of the present invention is to provide a powerplant having minimal bulk, whereby to allow freedom of movement so that a person riding a bicycle provided with an auxiliary powerplant can also easily pedal the bicycle manually.

A further object of the invention is to provide a motor which can be installed in most existing bicycles without having to alter the essence of their structure.

Another object of the present invention is to provide a powerplant that generates an amount of power sufficient to give it a speed that is significant in its field of use.

Another object of the present invention is to provide a powerplant that can also act as a generator, for example, applied to a cycle, during downhill travel or during propulsion with the pedals alone.

Another object of the present invention is to provide a motor for wheeled vehicles that can be produced with conventional technologies and with power levels that are adequate for the particular use.

Another object of the present invention is to provide a motorized cycle having competitive costs with respect to conventional cycles and wherein maneuverability is not compromised by the powerplant.

This aim, these and other objects which will become apparent hereinafter are achieved by a powerplant for wheeled vehicles, as defined in claim 1.

### Brief description of the Drawings

Further characteristics and advantages of the present invention will become apparent from the following detailed description of two preferred embodiments of a motorized cycle, illustrated only by way of non-limitative example in the accompanying drawings, wherein:
figure 1 is a general side view or a bicycle including a powerplant according to the invention, in a first embodiment;
figures 2 and 3 are, respectively, an axonometric view and a sectional view of a detail of the bicycle of figure 1;
figure 4 is a schematic view ox the powerplant related to figure 1;
figure 5 is a block diagram of the electrical operation of the powerplant of figure 1;
figure 6 is a fragmentary side view of a bicycle including a powerplant according to the invention, in a second embodiment;
figure 7 is a perspective view of the motor of figure 6;
figure 8 is a partially sectional view of the powerplant of figure 6;
figures 9 and 10 are front elevational views of two different components of the powerplant of figure 6.

### Ways of carrying out the Invention

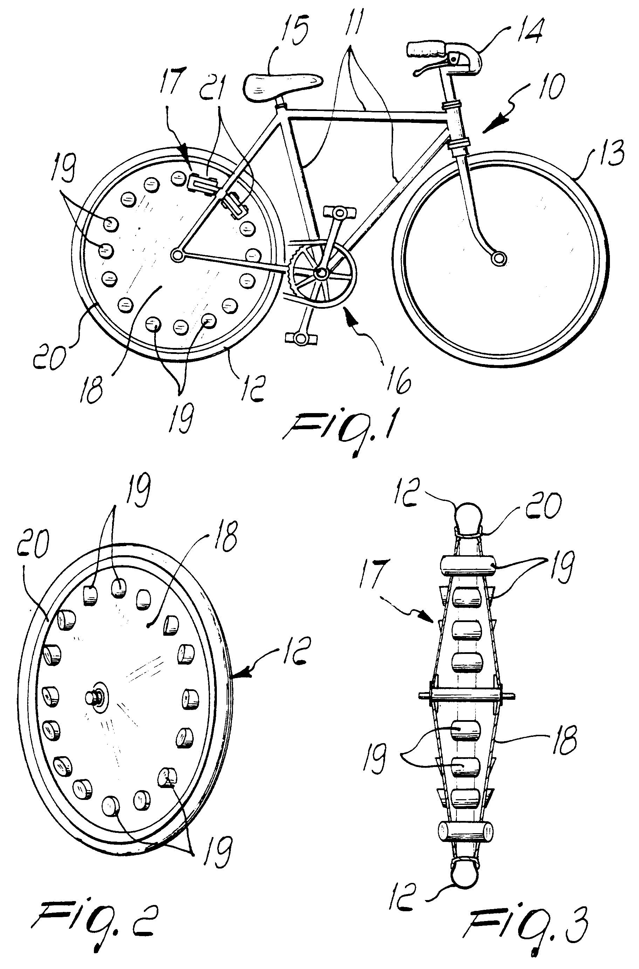

With particular reference to figures 1 to 5, a bicycle including a powerplant according to the invention is generally designated by the reference numeral 10 in a first embodiment.

The bicycle 10 comprises, in a conventional manner, a frame 11 provided with wheels 12 and 13, a handlebar 14, a saddle 15, and pedals 16.

The wheel 12 includes the powerplant, which is generally designated by the reference numeral 17.

More specifically, the wheel 12 is of the disc type, with a disc 18 that supports a rim 20 and a plurality of equidistant permanent magnets 19 arranged along the circumference proximate to said rim 20.

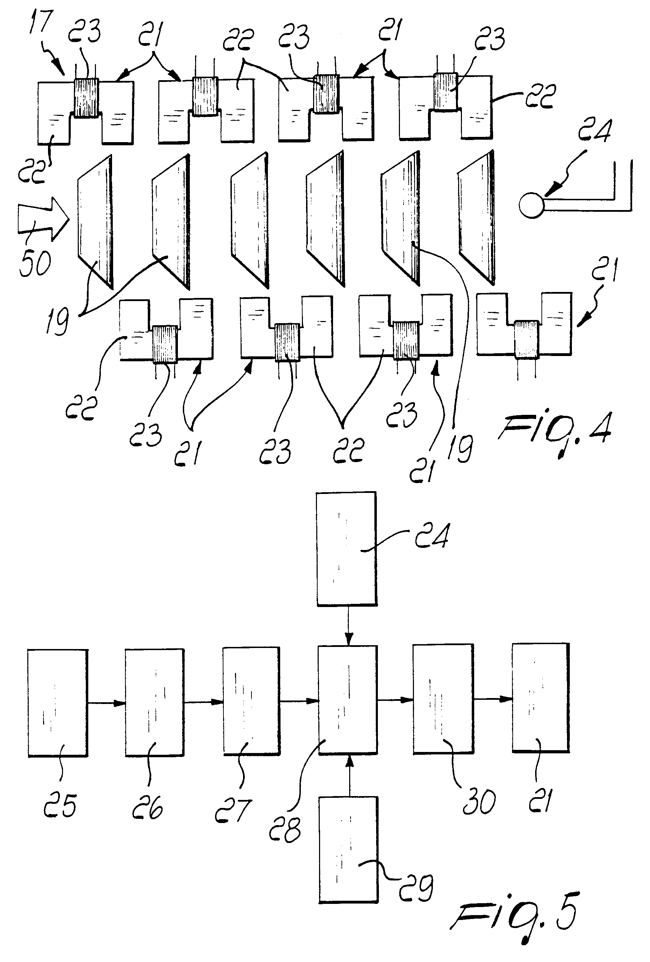

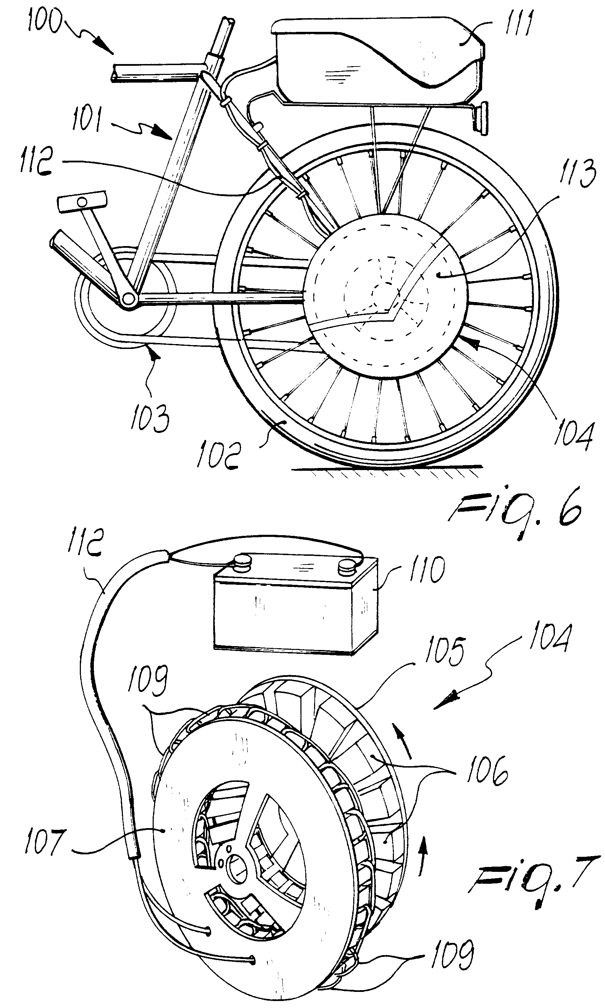

Each one of the permanent magnets 19 is substantially cylindrical, and has end surfaces lying on respective planes which are inclined by an angle of 30 to 45 sexagesimal degrees with respect to the longitudinal axis of the corresponding permanent magnet 19. The end surfaces diverge symmetrically along the path of movement 50 (see figure 4) defined by the permanent magnets 19 upon rotating the wheel 12 during forward travel of the bicycle 10.

All the permanent magnets 19, which are inserted in the disc 18, are furthermore concordantly polarized; upon assembly, the poles of each magnet protrude from the opposite sides of the wheel 12.

In alternative embodiments, it is also possible to provide disk-like permanent magnets that are fixed externally to the disc wheel or to the spokes of a conventional wheel.

The frame 11 supports, in this case, four electromagnets 21 which are arranged in pairs and opposite to each other on a corresponding side of the wheel 12 and are furthermore mutually offset and arranged adjacent to the path of movement of the permanent magnets 19.

The electromagnets 21 are all identical, and each one is constituted by a C-shaped core 22 made of ferrite; a conductor 23 is wound around the central region of said core, and the center distance between the ends of said core is smaller than the center distance between two successive permanent magnets 19.

The frame 11 furthermore supports sensors 24 (in this case, only one is shown); said sensors are located at a passage defined between the electromagnets 21 along the path of movement of the permanent magnets 19. The sensors indicate the position of the permanent magnets 19 when they are about to pass between the pairs of electromagnets 21.

The powerplant 17 furthermore comprises rechargeable batteries, of a per se known type, represented by the blocks 25 and 26 in figure 5.

The powerplant 17 furthermore comprises an oscillating circuit, represented by the block 27 in figure 5, and a pulse counter circuit, represented by the block 28 in figure 5.

The oscillating circuit produces a variable frequency on the supply current, with an amplitude, in this case, of 24 volts, and allows a more or less time-invariant power supply to the electromagnets.

The pulse counter circuit instead allows, in relation to the position of a speed regulator of a per se known type, represented by the block 29 in figure 5, to activate the power supply of the electromagnets after the acquisition of the pulses arriving from the sensors 24.

The counter circuit furthermore controls a power circuit that is also represented by a block 30 in figure 5.

In practice, operation is as follows: the wheel 12, by supporting the permanent magnets 19, substantially becomes the rotor of an electric motor, in which the stator is substantially constituted by the electromagnets 21 which are fixed to the frame 11.

Power is supplied to the electromagnets 21 in an alternating manner, so as to avoid creating points of equilibrium (which would otherwise be produced if the electromagnets were powered simultaneously).

The sensors 24 for detecting the presence of the permanent magnets 19 furthermore allow to synchronize the power supply of the electromagnets 21 according to the rotation rate of the wheel 12 and to commands, imparted by the driver, by means of the speed adjustment device.

It should also be noted that the powerplant can also act as a current generator which supplies power to the batteries for recharging, for example in downhill travel or during deceleration or when only the pedals are used for propulsion.

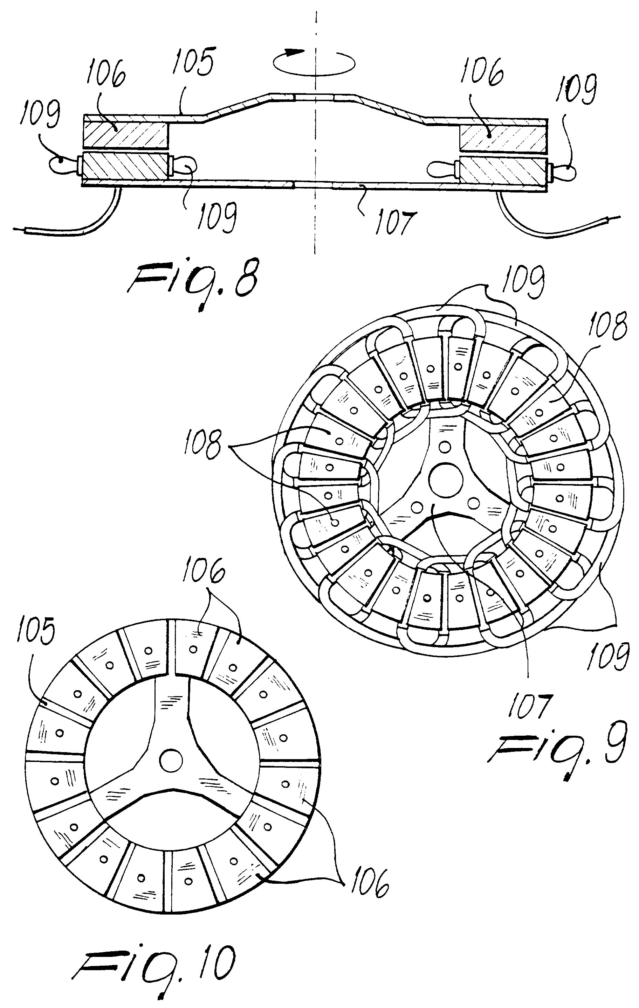

With particular reference to figures 6 to 10, a bicycle, which includes a powerplant according to the invention, in a second embodiment, is generally designated by the reference numeral 100.

The bicycle 100 comprises, in a conventional manner, a frame 101 provided with two wheels, only one whereof, designated by the reference numeral 102, is shown; a handlebar, not shown; a saddle, also not shown; and pedals, generally designated by the reference numeral 103.

The powerplant according to this second embodiment is associated with the wheel 102 and is generally designated by the reference numeral 104.

More specifically, in this second embodiment, the wheel 102 supports a first annular metallic support 105 that is fixed axially, in this case at the side of the wheel lying opposite to the pedals 103; said support carries a plurality of permanent magnets with alternating polarities, designated by the reference numeral 106 and arranged radially.

In this case, the permanent magnets are substantially flat and have a substantially trapezoidal profile.

The powerplant 104 furthermore comprises a second annular support 107 that is fixed (for example by means of screws, not shown) to the frame 101.

The second support 107 accommodates and locks, by cooperating with locking plates 108 detachably associable therewith, the stator windings 109 that constitute the electromagnets of the powerplant 104.

The stator windings 109, in this case, are executed according to three-phase motor layouts.

In this embodiment, the power supply means are constituted by per se known batteries, designated by the reference numeral 110 and contained in a case 111 which can be opened and accessed by the user and is supported by the frame 101.

The batteries 110 are connected to the stator windings 109 by means of a cable 112 that is also supported by the frame 101.

The stator windings 109 and the second support 107, in this embodiment, are covered by a protective housing 113.

In this second embodiment, too, the powerplant 104 comprises three sensors and a counter circuit, not shown, for which reference is made to the description given in relation to the first embodiment.

In practice, it has been observed that the intended aim and objects have been achieved; in particular, it should be noted that the powerplant according to the invention is extremely compact and fully eliminates the problem of power transmission, since the driving wheel itself is a component of the motor.

It is also noted that this solution leads to a considerable saving in the power absorbed by friction and allows, if applied in vehicles such as motorized bicycles, free action of the passenger when he decides to use the pedals.

The extreme constructive simplicity of the invention allows manufacture thereof with rather low costs.

Finally, it should be noted that the powerplant is also adapted to be provided in a kit form for use also in cycles that are already in use, and that it is possible to provide for its application also to vehicles with more than two wheels, even in more than one unit per vehicle.

The present invention is susceptible to numerous modifications and variations, all of which are within the scope of the inventive concept.

All the details may be replaced with other technically equivalent elements.

The materials and the dimensions may be any according to the requirements.

## Claims

1. A powerplant for wheeled vehicles, comprising a permanent-magnet rotor of an electric motor which is associated with at least one wheel (102), the stator of said motor being constituted by electromagnets (109), the number whereof is a multiple of the phases, said electromagnets being supported by a frame (101), means (110) for the alternative power supply to said electromagnets being provided, characterized in that said at least one wheel axially supports, at one of its side, a first annular support (105) for a plurality of permanent magnets (106) that are arranged radially.

2. A powerplant according to claim 1, characterized in that it comprises a second annular support (107) that is fixed to said frame (101), is associated with removable locking plates, and is adapted to accommodate and lock the stator windings (109) that constitute said at least two electromagnets.

3. A powerplant according to claim 1, characterized in that said permanent magnets (106) are flat and have a trapezoidal profile.

4. A powerplant according to claim 1, characterized in that said permanent magnets (106) are arranged with alternating polarities.

5. A powerplant according to one or more of the preceding claims, characterized in that it comprises an oscillating electronic circuit (27), a pulse counting circuit (28) associated with a speed adjustment device (29) and with said sensors, and a power circuit (25, 26), for supplying power to said at least two electromagnets (21) in accordance with the speed and position of said permanent magnets (19; 106).

6. A powerplant according to one or more of the preceding claims, characterized in that said power supply means comprise batteries (110) fixed to said frame.

## Patentansprüche

1. Antriebseinrichtung für Radfahrzeuge, mit einem Permanentmagnetläufer eines Elektromotors, der mindestens einem Rad (102) zugeordnet ist und dessen Ständer durch Elektromagnete (109) gebildet ist, deren Anzahl ein Vielfaches der Phasen ist und die an einem Rahmen (101) gehalten sind, und mit Mitteln (110) zur alternativen Stromversorgung der Elektromagnete, dadurch **gekennzeichnet**, daß mindestens ein Rad auf seiner einen Seite axial eine erste Ringhalterung (105) für mehrere radial angeordnete Permanentmagnete (106) trägt.

2. Antriebseinrichtung nach Anspruch 1, dadurch **gekennzeichnet**, daß sie eine zweite Ringhalterung (107) enthält, die an dem Rahmen (101) befestigt, entfernbaren Verriegelungsplatten zugeordnet und zur Aufnahme und Verriegelung der Ständerwicklungen (109) der mindestens zwei Elektromagnete geeignet ist.

3. Antriebseinrichtung nach Anspruch 1, dadurch **gekennzeichnet**, daß die Permanentmagnete (106) flach sind und ein trapezförmiges Profil haben.

4. Antriebseinrichtung nach Anspruch 1, dadurch **gekennzeichnet**, daß die Permanentmagnete (106) mit wechselnden Polaritäten angeordnet sind.

5. Antriebseinrichtung nach einem oder mehreren der vorhergehenden Ansprüche, dadurch **gekennzeichnet**, daß sie eine elektronische Oszillatorschaltung (27), eine Impulszählerschaltung (28) in Zuordnung zu einer Geschwindigkeitseinstellvorrichtung (29) und zu den Sensoren und eine Stromversorgungsschaltung (25, 26) zur Stromversorgung der mindestens zwei Elektromagnete (21) entsprechend der Geschwindigkeit und der Position der Permanentmagnete (19; 106) enthält.

6. Antriebseinrichtung nach einem oder mehreren der vorhergehenden Ansprüche, dadurch **gekennzeichnet**, daß die Stromversorgung an dem Rahmen befestigte Batterien (110) enthält.

## Revendications

1. Groupe moteur pour véhicules à roues, comprenant un rotor à aimants permanents d'un moteur électrique qui est associé à au moins une roue (102), le stator dudit moteur étant constitué par des électroaimants (109) dont le nombre est un multiple du nombre de phases, lesdits électroaimants étant supportés par un cadre (101), des moyens (110) pour l'alimentation en courant alternatif vers lesdits électroaimants étant prévus,
caractérisé en ce que ladite roue supporte axialement, à l'une de ses faces, un premier support annulaire (105) pour une pluralité d'aimants permanents (106) qui sont agencés radialement.

2. Groupe moteur selon la revendication 1,
caractérisé en ce qu'il comprend un second support annulaire (107) qui est fixé audit cadre (101), est associé à des plateaux de verrouillage amovibles, et est adapté pour recevoir et verrouiller les enrouleiments de stator (109) qui constituent lesdits deux électroaimants.

3. Groupe moteur selon la revendication 1,
caractérisé en ce que lesdits aimants permanents (106) sont plats et présentant un profil trapézoïdal.

4. Groupe moteur selon la revendication 1,
caractérisé en ce que lesdits aimants permanents (106) sont agencés avec des polarités alternées.

5. Groupe moteur selon l'une ou plusieurs des revendications précédentes,
caractérisé en ce qu'il comprend un circuit électronique oscillant (27), un circuit de comptage d'impulsions (28) associé à un dispositif de réglage de vitesse (29) et auxdits capteurs, et un circuit de puissance (25,26) pour fournir de la puissance auxdits deux électroaimants (21) selon la vitesse et la position desdits aimants permanents (19 ; 106).

6. Groupe moteur selon l'une ou plusieurs des revendications précédentes,
caractérisé en ce que lesdits moyens d'alimentation de puissance comprennent des batteries (110) fixées audit cadre.
